# EUROPÄISCHE PATENTSCHRIFT

(11) **EP 0 670 818 B1**
(45) Veröffentlichungstag und Bekanntmachung des Hinweises auf die Patenterteilung: **11.03.1998**
(21) Anmeldenummer: 94901786.7
(22) Anmeldetag: 10.11.1993
(51) Int. Cl.: C04B 33/13, C04B 33/16, C04B 33/22

(54) **VERFAHREN ZUM HERSTELLEN VON KERAMISCHEN KÖRPERN, IN WELCHEN SCHWERMETALLHALTIGE RÜCKSTÄNDE EINGEBUNDEN SIND, UND SO HERGESTELLTE KERAMISCHE KÖRPER**
METHOD OF MANUFACTURING CERAMIC BLOCKS IN WHICH RESIDUES CONTAINING HEAVY METALS ARE BOUND, AND THE CERAMIC BLOCKS THUS MANUFACTURED
PROCEDE DE FABRICATION DE CORPS CERAMIQUES AUXQUELS SONT LIES DES RESIDUS CONTENANT DES METAUX LOURDS, ET CORPS CERAMIQUES AINSI REALISES

(30) Priorität: 11.11.1992 DE 4238083
(43) Veröffentlichungstag der Anmeldung: 13.09.1995
(73) Patentinhaber: BETEILIGUNGSGESELLSCHAFT HARSCH GMBH UND CO. KG, D-75015 Bretten (DE)
(72) Erfinder: BENDER, Albert, D-75015 Bretten (DE); HARSCH, Wolfgang, D-75015 Bretten (DE)
(74) Vertreter: Twelmeier, Ulrich, Dipl.Phys.
(86) Internationale Anmeldenummer: EP9303144
(87) Internationale Veröffentlichungsnummer: WO9411320

(56) Entgegenhaltungen:
- EP-A- 0 402 746
- WO-A-89/10176
- WO-A-92/09539
- DE-U- 8 904 633
- GB-A- 2 061 241

## Beschreibung

### Technisches Gebiet

Die Erfindung geht aus von einem Verfahren zum Einbinden von schwermetallhaltigen Rückständen in keramische Körper durch Mischen der schwermetallhaltigen Rückstände mit Ton, Formen von Grünlingen aus der Mischung und Hartbrennen oder Sintern der Grünlinge.

### Stand der Technik

Aus der DE-PS 36 30 697 ist es bekannt, schwermetallhaltige Schlämme, insbesondere Galvanikschlämme mit Ton und Flußmitteln zu vermengen und anschließend bei Temperaturen zwischen 750°C und 1150°C zu Klinkern zu brennen, deren Restporosität kleiner als 6 % ist. Dabei können die schwermetallhaltigen Schlämme in einer Menge bis zu 50 Gew.-% (Schlammtrockensubstanz) dem Ton zugemengt werden. Der Rest der zu brennenden Formmasse besteht mithin aus Ton, Magerungsmitteln wie Schamottemehl und Flußmitteln wie Feldspate. Zu den unschädlich zu machenden schwermetallhaltigen Schlämmen kommen also erhebliche Mengen weiterer Stoffe hinzu, so dass die keramischen Körper, die erzeugt werden, volumenmässig sehr viel mehr ausmachen als der darin eingebundene schwermetallhaltige Rückstand.

In der WO 92/09539 ist offenbart, dass man schwermetallhaltige Filterstäube mit Ton, Wasser und Flußmitteln mischt, formt und bei einer Temperatur unterhalb des Erweichungspunktes brennt, dass eine Schmelzphase gebildet wird, die zu einer Verglasung und damit zu einem dauerhaften Einschluß der Schwermetalle führt. Dabei kann auf Flußmittel verzichtet werden, wenn der Filterstaub zuvor in alkalisch reagierendem Medium gewaschen wird. Der Anteil des Filterstaubes an der zu brennenden Mischung beträgt (bezogen auf Trockenmasse) nicht mehr als 50 Gew.-%, vorzugsweise 1/3. Der Rest entfällt wie beim Einbinden von Galvanikschlamm auf Ton und Flußmittel und erhöht das Volumen der einzubindenden schwermetallhaltigen Rückstände. Aus Kostengründen und im Hinblick auf knappe Deponieflächen wäre es jedoch wünschenswert, das Volumen der schwermetallhaltigen keramischen Körper zu verringern.

Aus der EP 0 402 746 ist es bekannt, staub- oder schlammförmig anfallenden Sonderabfall in ein tonkeramisches Erzeugnis einzubinden, für dessen Herstellung als tonmineralhaltiger Rohstoff verunreinigte Tone, nämlich Abraumton oder ein Bergematerial aus dem Kohlebergbau verwendet werden.

### Darstellung der Erfindung

Diese Aufgabe löst die vorliegende Erfindung dadurch, dass sie für die Herstellung der schwermetallhaltigen keramischen Körper anstelle von Ton Schluff einsetzt. Gegenstand der Erfindung ist ein Verfahren nach den unabhängigen Ansprüchen 1 und 2, bevorzugte Ausführungsformen sind Gegenstand der abhängigen Ansprüche 3-22.

Ein weiterer Gegenstand der Erfindung sind die durch Anwendung des erfindungsgemäßen Verfahrens erhaltenen keramischen Körpes. Unter Schluffen versteht man eine Fraktion von Erdablagerungen, deren Korndurchmesser zwischen 0,002 und 0,06 mm liegen. Für Zwecke der Erfindung besonders geeignet sind Schluffe im Korngrößenbereich von 0,01 bis 0,025 mm. Die chemische Zusammensetzung der natürlichen Schluffe ist je nach Art der geologischen Herkunft und Entstehung verschieden. Reine Schluffe haben meist rolligen Charakter und sind leicht von Ton zu unterscheiden. Darüberhinaus erhält man Schluffe als Feinstfraktionen aus Bodenwaschanlagen und anderen chemischphysikalischen Behandlungsanlagen. Die zuletzt genannten Schluffe sind im allgemeinen mit Schadstoffen, häufig auch mit Schwermetallen belastet und müssen deshalb entsorgt werden. Dadurch, dass sie anstelle von Ton erfindungsgemäss eingesetzt werden, kann man keramische Körper erhalten, die in allen ihren Komponenten schwermetallhaltig sind und damit hinsichtlich des erzielbaren Volumens und der Wirtschaftlichkeit das derzeit erreichbare Optimum darstellen. Trotz dieser Zielrichtung ist die Erfindung aber nicht darauf beschränkt, schadstoffhaltige Schluffe einzusetzen, vielmehr können auch unbelastete Schluffe eingesetzt werden; insoweit liegt der Vorteil des erfindungsgemässen Verfahrens darin, eine Alternative zum Einsatz von Tonen zu bieten, wodurch einerseits der Stand der Technik bereichert wird und andererseits von Fall zu Fall eine preiswertere Alternative zum Ton zur Verfügung steht.

Das Verfahren kann so ausgeübt werden, dass man den schwermetallhaltigen Rückstand, insbesondere einen Hydroxidschlamm, mit Schluff mischt, erforderlichenfalls Wasser hinzufügt, um eine knetbare Masse zu erhalten. Aus dieser Masse werden dann Grünlinge in der gewünschten Form gebildet, insbesondere durch Strangpressen und Zerteilen des Stranges. Die Grünlinge werden dann in an sich bekannter Weise getrocknet, z.B. zwei bis drei Tage bei einer Temperatur von 105° C bis 150° C, bevorzugt bei 130° C, und dann in einem Brennofen bei einer Temperatur und mit solcher Dauer gebrannt, die zu dicht gesinterten Körpern führen, in welchen die Schwermetallanteile durch Verglasung oder durch Bilden silikatischer Phasen (z.B. Spinelle und Mischkristalle, welche ebenso stabil sind wie die Glasphase) gebunden sind. Um das zu erreichen, muss die Brenntemperatur so hoch gewählt werden, dass eine solche Phase gebildet wird, doch sollte die Brenntemperatur unterhalb des Erweichungspunktes liegen. Man erhält auf diese Weise ein Erzeugnis, welches einem Steinzeug oder einem Klinker ähnlich ist.

Die Bestandteile der Mischung können aber auch trocken gemischt, zu Formlingen gepreßt und dann gebrannt werden.

Damit beim Brennen nicht größere Mengen Schwermetalle ausgetrieben werden, ist anzustreben, die Brenntemperatur so niedrig wie möglich zu halten. Dazu ist es günstig, wenn die Verglasung bei möglichst niedriger Temperatur einsetzt. Eine solche Aufgabe erfüllen gewöhnlich Flußmittel. Im vorliegenden Fall ist der Zusatz eines Flußmittels jedoch nicht unbedingt erforderlich, da es sich gezeigt hat, dass schwermetallhaltige Hydroxidschlämme, insbesondere Galvanikschlämme, bereits als Flußmittel wirken. Vorzugsweise werden die keramischen Körper bei Temperaturen zwischen 950° C und 1150° C gebrannt, noch besser unterhalb von 1080° C, nämlich zwischen 1020° C und 1070° C. Als besonders günstig hat sich der enge Temperaturbereich von 1040° C bis 1060° C erwiesen.

Die Schluffe, die zum Einsatz kommen können, variieren je nach ihrer Herkunft in ihrer Zusammensetzung und damit auch in ihrem Brennverhalten. Vorzugsweise verwendet man im erfindungsgemässen Verfahren deshalb eine Mischung aus unterschiedlich zusammengesetzten Schluffen, weil auf diese Weise sonst mögliche Extreme in der Zusammensetzung gemildert und ausgeglichen werden können.

Soweit Schluffe mit organischen Schadstoffen (z.B. Mineralöle, PCBs) belastet sind, werden diese vorteilhafterweise durch das Brennen ausgetrieben und zerstört; erforderlichenfalls kann eine Nachverbrennung der Rauchgase erfolgen. Die zu brennenden Körper durchwandern den Brennofen vorzugsweise im Gegenstrom zu den Rauchgasen, so dass eine erneute Ablagerung organischer Bestandteile auf den Körpern in der Abkühlphase ausgeschlossen ist.

In den Mischungen, aus denen die keramischen Körper gebrannt werden sollen, verwendet man zweckmässigerweise 50 bis 90 Gewichtsteile Schluff oder eine Mischung von Schluffen und 50 bis 10 Gewichtsteile Hydroxidschlamm, insbesondere Galvanikschlamm, wobei die Mengenangaben auf Trockensubstanz bezogen sind. Bei geringeren Anteilen Hydroxidschlamm wird das Verfahren wirtschaftlich uninteressant, ausserdem steigen die Brenntemperaturen. Verwendet man mehr als 50 Gewichtsteile Hydroxidschlamm, ergibt sich ein unerwünschter Anstieg der Auswaschungsraten von Schwermetallen.

Schluffe sind verglichen mit Tonen ein mageres Material. Auch Galvanikschlamm ist sehr mager. Bei mageren Massen kann es Probleme mit der Verarbeitung geben, da sie einen schwächeren Zusammenhalt haben als Tone. Es kann deshalb, wenn die Mischungen zu mager sind, zu Problemen mit dem Pressen von Grünlingen, mit dem Trocknen und mit Rißbildungen kommen, die sich in das fertige Produkt fortsetzen. Wenn die Mischungen zu mager sein sollten, sollte deshalb ein Plastifizierungsmittel zugegeben werden, z.B. ein Ton, aber nicht mehr als 20 Gewichtsteile der Mischung, vorzugsweise nur 5 bis 10 Gewichtsteile der Mischung, jeweils bezogen auf die Trockenmasse. Als Plastifizierungsmittel kann ein Ton eingesetzt werden, insbesondere ein aluminiumreicher Ton. Eine andere vorteilhafte Möglichkeit ist die Verwendung von Aluminiumhydroxidschlamm als Plastifizierungsmittel. Aluminiumhydroxidschlamm fällt in chemisch-industriellen Prozessen als Abfall an und muss entsorgt werden; wenn er im erfindungsgemässen Verfahren als Plastifizierungsmittel eingesetzt wird, schlägt man deshalb zwei Fliegen mit einer Klappe.

Metallhydroxidschlämme, die erfindungsgemäss eingebunden und inertisiert werden können, sind insbesondere Galvanikschlämme, Schlämme, die in industriellen Beizanlagen anfallen, Schlämme aus anderen chemischen Löseprozessen und Fällungsprozessen oder aus Abwasserreinigungsanlagen. Solche Schlämme können auch in Kombination eingesetzt werden. Sie enthalten mehr oder weniger Schwermetalle; Galvanikschlämme enthalten viel, andere Hydroxidschlämme weniger, Aluminiumhydroxidschlamm i.a. keine Schwermetalle. Die Erfindung ist nicht auf das Einschließen von schwermetallhaltigen Hydroxidschlämmen beschränkt. Die Erfindung kann angewendet werden, um schwermetallhaltige Filterstäube und Flugaschen z.B. aus Müllverbrennungsanlagen einzubinden. Solche Filterstäube und Flugaschen enthalten ein ganzes Spektrum von Schwermetalloxiden. Diese kann man z.B. mit dem Hydroxidschlamm mischen und erhält dann einen Hydroxidschlamm mit erhöhtem Oxidgehalt. Alternativ kann man aber auch den Hydroxidschlamm, den Filterstaub und/oder die Flugasche und den Schluff in einem Mischer zusammenfügen und mischen. Besonders günstig ist es, wenn man den einzusetzenden Filterstaub oder die einzusetzende Flugasche vorher alkalisch wäscht, insbesondere bei einem pH-Wert von mindestens 9. Im Vergleich zum Einsatz von nichtgewaschener Flugasche oder nicht gewaschenem Filterstaub erreicht man dadurch eine niedrigere Brenntemperatur (die Verglasung setzt früher ein) und damit ein Dichtsintern der keramischen Körper bei niedrigerer Temperatur in Kombination mit einem geringeren Schwermetallaustrieb beim Brennen und niedrigerer Auswaschrate. Nach gegenwärtigem Kenntnisstand scheint die Verwendung von Schluff in Kombination mit Metallhydroxidschlamm, Galvanikschlamm, gewaschenem Filterstaub und/oder gewaschener Flugasche das wirtschaftliche und technologische Optimum zu sein. Die bevorzugte Zusammensetzung dafür ist

| | |
|---|---|
| 10 - 44 | Gewichtsteile Hydroxidschlämme, insbesondere Galvanikschlämme, |
| 5 - 30 | Gewichtsteile Filterstäube und/oder Flugaschen, |
| 0 - 20 | Gewichtsteile eines Plastifizierungsmittels und |
| 50 - 90 | Gewichtsteile einer Schluffmischung. |

Durch Anwendung der Erfindung können ferner Zusätze inertisiert werden, die ebenfalls Problemstoffe darstellen, wie Glasschleifschlämme (sie fallen als Abfälle in der glasverarbeitenden Industrie und in der Emailindustrie an), Gießereialtsande und Strahlsande (dabei handelt es sich vorwiegend um Abfall-Quarzsande mit unterschiedlicher Schadstoffbelastung) und Tonmehle aus Trockenabscheidern (sie fallen bei der Trockenadsorption in Abgasreinigungsanlagen wie z.B. Abgasreinigungsfiltern an). Solche Zusätze können zusammengenommen mit 0-30 Gew.-% in der Mischung enthalten sein.

### Beispiele:

1.
Es wird eine Mischung aus 66 Gewichtsteilen einer Schluffmischung, 22,3 Gewichtsteilen Galvanikschlamm und 11,7 Gewichtsteilen Ton hergestellt (Angaben bezogen auf Trocken masse).
Der Galvanikschlamm stammt aus der Oberflächenveredelung von Metallen und hat nach einer Vollanalyse folgende Inhaltstoffe (Angaben in Gew.-%):

| | |
|---|---|
| Cadmium | 0,003 |
| Chrom | 11,6 |
| Kupfer | 0,5 |
| Nickel | 0,5 |
| Blei | 0,07 |
| Zink | 17,4 |
| Calzium | 7,7 |
| Aluminium | 1,6 |
| Eisen | 6,0 |
| Natrium | 1,8 |
| Kalium | 0,2 |
| Magnesium | 0,4 |
| Chlorid | 2,2 |
| Sulfat | 5,4 |
| Glühverlust | 20,7. |

Die verwendete Schluffmischung ist eine Mischung aus fünf verschiedenen Rückständen aus Bodenwaschanlagen. Ihre Schadstoffbelastung ergibt sich aus einer Analyse wie folgt (Angaben in Gew.-%) :

| | |
|---|---|
| Aluminium | 6,0 |
| Calzium | 6,1 |
| Cadmium | 0,001 |
| Chrom | 0,009 |
| Kupfer | 0,02 |
| Eisen | 4,7 |
| Magnesium | 1,8 |
| Nickel | 0,003 |
| Blei | 0,04 |
| Zink | 0,05 |
| Sulfat | 0,3 |
| Karbonat | 7,4 |
| Kohlenwasserstoffe | 1,9. |

Nach intensiver Homogenisierung und Einstellung der gewünschten Plastizität so, dass die Mischung mit einer Vakuum-Strangpresse verarbeitbar ist, wird aus der Mischung unter Anwendung von 6 bar Preßdruck und 96 % Vakuum ein zylindrischer Strang mit einem Durchmesser von 33 mm gepreßt und zu Hubeln mit einer Höhe von 30 mm zerteilt.
Die so erhaltenen Grünlinge werden anschließend 60 Stunden lang bei 110° - 130° C getrocknet und danach in einem Rohrofen bei einer Garbrandtemperatur von 1070 ° C, 8,5 Stunden lang gebrannt und dann schnell abgekühlt. Das Auslaugverhalten der gebrannten Körper wurde nach DIN 38414 (Teil 4, DEV S4) 2 x 24 Stunden lang mit der zehnfachen Menge auf einem Schütteltisch ausgelaugt, einmal mit neutralem Wasser und einmal mit Wasser, welches von CO₂- Gas durchströmt wurde und somit sauer gepuffert war.
Das Ergebnis ist in der nachstehenden Tabelle 1 dargestellt.

**Tabelle 1**

| Elutionswerte des gebrannten Produktes | | |
|---|---|---|
| | Eluat mit | |
| | neutralem Wasser | CO -angesäuertem Wasser |
| 1. Kationen in mg/l | | |
| Cd | n.n | n.n |
| Cr | 0,067 | 0,14 |
| Cu | n.n | 0,29 |
| Ni | n.n | 0,038 |
| Pb | n.n | n.n |
| Zn | 0,046 | 0,99 |
| Ca | 9,3 | 29,4 |
| Mg | 0,66 | 2,6 |

| 2. Anionen in mg/l | | |
|---|---|---|
| Chlorid | 247 | 154 |
| Nitrat | n.n | n.n |
| Sulfat | n.n | n.n |

| 3. allgemeine Kennwerte* | | |
|---|---|---|
| pH-Wert | 6,9/6,8 | 5,6/4,9 |
| Leitfähigkeit (µS/cm) | 67/37 | 231/83 |

| | | |
|---|---|---|
| *Eluat wurde nach 24h/48h gemessen | | |

Die gebrannten Körper weisen eine Wasseraufnahme von nicht mehr als 4 % und eine hohe Dichte von 2,05 g/cm³ auf. Damit sind die Bedingungen nach DIN 105 Teil 4 erfüllt.
Während des Brennens ausgetriebene Schwermetalle werden im Abgaskamin des Brennofens durch Zeolithe aufgefangen und festgehalten. Die mit Schwermetallen beladenen Zeolithe können gemahlen und als Zuschlagstoff in das erfindungsgemässe Verfahren eingeführt werden.
2.
Es wird eine Mischung aus 34 Gewichtsteilen Galvanikschlamm in der Zusammensetzung gemäss Beispiel (1), 56 Gewichtsteilen Schluff in der Zusammensetzung gemäss Beispiel (1) und 10 Gewichtsteilen Aluminiumhydroxidschlamm hergestellt (Angaben bezogen auf Trockenmasse) und nach dem Verfahren gemäss Beispiel (1) Hubel mit 33 mm Durchmesser und 30 mm Höhe gepreßt, getrocknet und danach in einem Rohrofen bei einer Garbrandtemperatur von 1060° C 8,5 Stunden lang gebrannt und dann schnell abgekühlt. Das Auslaugverhalten der gebrannten Erzeugnisse wurde nach derselben Methode wie im Beispiel (1) untersucht. Die Ergebnisse sind in der nachstehenden Tabelle 2 angegeben.

**Tabelle 2**

| Elutionswerte des gebrannten Produktes Beispiel 2 | | |
|---|---|---|
| | Eluat mit | |
| | neutralem Wasser | CO₂-angesäuertem Wasser |
| 1. Kationen in mg/l | | |
| Cd | n.n | n.n |
| Cr | 0,14 | 0,5 |
| Cu | n.n | 3 |
| Ni | n.n | n.n |
| Pb | n.n | n.n |
| Zn | 0,076 | 2 |
| Ca | 5 | 50,8 |
| Mg | 2,3 | 1,5 |

| 2. Anionen in mg/l | | |
|---|---|---|
| Chlorid | 211 | 38 |
| Nitrat | n.n | n.n |
| Sulfat | n.n | n.n |

| 3. allgemeine Kennwerte* | | |
|---|---|---|
| pH-Wert | 6,4/6,2 | 5,0/4,7 |
| Leitfähigkeit (µS/cm) | 60/40 | 250/200 |

| | | |
|---|---|---|
| *Eluat wurde nach 24h/48h gemessen | | |

Das gebrannte Erzeugnis weist eine Wasseraufnahme von 3% und eine Rohdichte von 2,4g/cm³ auf. Damit sind die Bedingungen nach DIN 105 Teil 4 erfüllt.
3.
Filterstaub aus einer Rauchgasreinigungsanlage einer Müllverbrennungsanlage mit nachstehend wiedergegebenen, durch eine Vollanalyse ermittelten Inhaltsstoffen (Gehalte in Gew.-%)

| | |
|---|---|
| Al | 7,0 |
| Ca | 11,6 |
| Cd | 0,02 |
| Cr | 0,04 |
| Cu | 0,09 |
| Fe | 3,8 |
| Mg | 1,6 |
| Ni | 0,01 |
| Pb | 0,5 |
| Zn | 2,0 |
| Sulfat | 5,7 |
| Chlorid | 6,6 |

wurde mit Wasser gewaschen, abfiltriert und getrocknet.
Aus 17 Gewichtsteilen des gewaschenen Filterstaubes, 17 Gewichtsteilen Galvanikschlamm in der Zusammensetzung wie im ersten Beispiel , 56 Gewichtsteilen Schluff in der Zusammensetzung wie im ersten Beispiel und aus 10 Gewichtsteilen Ton als Plastifiziermittel wurden wie im ersten Beispiel Hubel geformt, getrocknet in einem Rohrofen bei einer Garbrandtemperatur von 1050° C 8,5 Stunden lang gebrannt und rasch abgekühlt. Das gebrannte Erzeugnis weist eine Wasseraufnahme von 5 % und eine Rohdichte von 2,0 g/cm³ auf. Damit sind die Bedingungen nach DIN 105 Teil 4 erfüllt.

## Patentansprüche

1. Verfahren zum Herstellen von keramischen Körpern, in welchen schwermetallhaltige Rückstände eingebunden sind, durch
- Zubereiten einer formbaren, die schwermetallhaltigen Rückstände, Wasser, Schluff und einen verglichen mit dem Schluff kleineren Anteil von 0-20 Gewichtsteilen eines Plastifizierungsmittels enthaltenden Mischung,
- Formen von Grünlingen aus der Mischung und
- Brennen der Grünlinge bei einer Temperatur und mit solcher Dauer, die zu dichtgesinterten, steinzeug- oder klinkerähnlichen Körpern führen.

2. Verfahren zum Herstellen von keramischen Körpern, in welchen schwermetallhaltige Rückstände eingebunden sind, durch
- Zubereiten einer die schwermetallhaltigen Rückstände, Schluff und einen verglichen mit dem Schluff kleineren Anteil von 0-20 Gewichtsteilen eines Plastifizierungsmittels enthaltenden Mischung,
- Pressen vcn Grünlingen aus der Mischung und
- Brennen der Grünlinge bei einer Temperatur und mit solcher Dauer, die zu dichtgesinterten, steinzeug- oder klinkerähnlichen Körpern führen.

3. Verfahren nach Anspruch 1 oder 2, **dadurch gekennzeichnet**, dass zur Zubereitung der Mischung schwermetallhaltiger Hydroxidschlamm oder ein Rückstand daraus mit Schluff gemischt wird.

4. Verfahren nach Anspruch 1, 2 oder 3, **dadurch gekennzeichnet**, dass bei Temperaturen zwischen 900°C und 1150°C gebrannt wird.

5. Verfahren nach Anspruch 4, **dadurch gekennzeichnet**, dass bei Temperaturen zwischen 950°C und 1080°C gebrannt wird.

6. Verfahren nach Anspruch 5, **dadurch gekennzeichnet**, dass bei einer Temperatur zwischen 1020°C und 1070°C, insbesondere zwischen 1040°C und 1060°C gebrannt wird.

7. Verfahren nach einem der vorstehenden Ansprüche, **dadurch gekennzeichnet**, dass 50 bis 90 Gewichtsteile Schluff mit 50 bis 10 Gewichtsteilen Hydroxidschlamm gemischt werden, wobei die Mengenangaben auf Trockensubstanz bezogen sind.

8. Verfahren nach einem der vorstehenden Ansprüche, **dadurch gekennzeichnet,** dass
| | |
|---|---|
| 50 bis 90 | Gewichtsteile Schluff mit |
| 10 bis 44 | Gewichtsteilen Hydroxidschlamm oder Rückständen davon, |
| 0 bis 30 | Gewichtsteilen Filterstäube und/ oder Flugaschen, |
| 0 bis 20 | Gewichtsteilen Plastifizierungsmittel und |
| 0 bis 30 | Gewichtsteilen eines Zusatzes von Glasschleifschlamm und/oder Gießereialtsand und/oder Strahlsand und/oder Tonmehl aus Trockenabscheidern |
gemischt werden (Angaben bezogen auf Trockenmasse).

9. Verfahren nach Anspruch 7 oder 8, **dadurch gekennzeichnet**, dass 2 Gewichtsteile Schluff mit 1 Gewichtsteil Hydroxidschlamm gemischt werden.

10. Verfahren nach einem der vorstehenden Ansprüche, **dadurch gekennzeichnet**, dass eine Mischung aus unterschiedlich zusammengesetzten Schluffen eingesetzt wird.

11. Verfahren nach einem der vorstehenden Ansprüche, **dadurch gekennzeichnet**, dass Schluffe mit Korndurchmessern von 0,010 bis 0,025 mm verwendet werden.

12. Verfahren nach einem der vorstehenden Ansprüche, **dadurch gekennzeichnet**, dass mit schwermetallhaltigen Rückständen belastete Schluffe verwendet werden.

13. Verfahren nach einem der vorstehenden Ansprüche, **dadurch gekennzeichnet**, dass Schluffe verwendet werden, die aus Bodenwaschanlagen stammen.

14. Verfahren nach einem der vorstehenden Ansprüche , **dadurch gekennzeichnet**, dass die Mischung nicht mehr als 10 Gewichtsteile des Plastifizierungsmittels enthält (bezogen auf Trockenmasse).

15. Verfahren nach Anspruch 14, **dadurch gekennzeichnet**, dass als Plastifizierungsmittel ein aluminiumreicher Ton eingesetzt wird.

16. Verfahren nach Anspruch 14, **dadurch gekennzeichnet**, dass als Plastifizierungsmittel ein Aluminiumhydroxidschlamm verwendet wird.

17. Verfahren nach einem der vorstehenden Ansprüche, **dadurch gekennzeichnet**, dass schwermetallhaltige Filterstäube und/oder Flugaschen zur Umwandlung von Metalloxiden in Hydroxide in alkalischem Medium gewaschen und als Hydroxidschlamm eingesetzt werden.

18. Verfahren nach Anspruch 17, **dadurch gekennzeichnet**, dass bei einem pH > 9 gewaschen wird.

19. Verfahren nach Anspruch 17 oder 18, **dadurch gekennzeichnet**, dass Hydroxidschlämme aus gewaschenen Filterstäuben und/oder Flugaschen in Kombination mit Hydroxidschlämmen aus Galvanikanlagen oder aus chemischen Fällungs- und Löseprozessen oder aus Abwasserreinigungsanlagen eingesetzt werden.

20. Verfahren nach Anspruch 19, **dadurch gekennzeichnet**, dass die zu Grünlingen verarbeitete Mischung (bezogen auf Trockenmasse)
| | |
|---|---|
| 10 bis 44 | Gewichtsteile Hydroxidschlämme, |
| 50 bis 90 | Gewichtsteile Schluffe, |
| 5 bis 30 | Gewichtsteile Filterstäube und/oder Flugaschen, |
| 0 bis 20 | Gewichtsteile Plastifizierungsmittel und |
| 0 bis 30 | Gewichtsteile eines Zusatzes von Glasschleifschlamm und/oder Gießereialtsand und/oder Strahlsand und/oder Tonmehl aus Trockenabscheidern |
enthält.

21. Verfahren nach einem der vorstehenden Ansprüche, **dadurch gekennzeichnet,** dass die Grünlinge durch Strangpressen und Zerteilen des Stranges geformt werden.

22. Verfahren nach Anspruch 21, **dadurch gekennzeichnet**, dass der Mischung ggfs. eine geringe Menge eines Preßhilfemittels zugesetzt wird.

23. Keramische Körper, die erhalten werden durch Anwendung eines Verfahrens nach einem der vorstehenden Ansprüche.

## Claims

1. Method of producing ceramic bodies in which heavy-metal-containing residues are embedded, comprising the steps of
- preparing a mouldable mixture composed of the heavy-metal-containing residues, water, silt and a smaller proportion, related to the silt, of 0 to 20 parts by weight of a plasticising agent,
- moulding green compacts from said mixture and
- baking the green compacts at a temperature and for a time such that tightly sintered bodies of a nature similar to stoneware or clinker are obtained.

2. Method of producing ceramic bodies in which heavy-metal-containing residues are embedded, comprising the steps of
- preparing a mixture composed of the heavy-metal-containing residues, silt and a smaller proportion, related to the silt, of 0 to 20 parts by weight of a plasticising agent,
- pressing green compacts from said mixture and
- baking the green compacts at a temperature and for a time such that tightly sintered bodies of a nature similar to stoneware or clinker are obtained.

3. Method according to claim 1 or 2, **characterised in that** for preparing the mixture heavy-metal-containing hydroxide sludge or a residue from the latter is mixed with silt.

4. Method according to claim 1, 2 or 3, **characterised in that** baking is effected at temperatures of between 900° Celsius and 1150° Celsius.

5. Method according to claim 4, **characterised in that** baking is effected at temperatures of between 950° Celsius and 1080° Celsius.

6. Method according to claim 5, **characterised in that** baking is effected at temperatures of between 1020° Celsius and 1070° Celsius, especially between 1040° Celsius and 1060° Celsius.

7. Method according to any of the preceding claims, **characterised in that** 50 to 90 parts by weight of silt are mixed with 50 to 10 parts by weight of hydroxide sludge, the stated quantities being related to dry substance.

8. Method according to any of the preceding claims, **characterised in that**
| | |
|---|---|
| 50 to 90 | parts by weight of silt are mixed with |
| 10 to 44 | parts by weight of hydroxide sludge or residues of the latter, |
| 0 to 30 | parts by weight of filter dusts and/or flue ashes, |
| 0 to 20 | parts by weight of a plasticising agent and |
| 0 to 30 | parts by weight of an admixture consisting of glass grinding sludge and/or waste foundry sand and/or blasting sand and/or finely ground fire clay from dry separators (weights related to dry weight). |

9. Method according to claim 7 or 8, **characterised in that** 2 parts by weight of silt are mixed with 1 part by weight of hydroxide sludge.

10. Method according to any of the preceding claims, **characterised in that** a mixture of silts of different compositions is used.

11. Method according to any of the preceding claims, **characterised in that** silts with grain sizes of between 0.010 and 0.025 mm are used.

12. Method according to any of the preceding claims, **characterised in that** silts contaminated with heavy-metal-containing residues are used.

13. Method according to any of the preceding claims, **characterised in that** silts from soil-washing plants are used.

14. Method according to any of the preceding claims, **characterised in that** the mixture contains a maximum of 10 parts by weight of the plasticising agent (related to dry weight).

15. Method according to any of the preceding claims, **characterised in that** the plasticising agent used in the clay is rich in aluminium.

16. Method according to any of the preceding claims, **characterised in that** the plasticising agent used is an aluminium hydroxide sludge.

17. Method according to any of the preceding claims, **characterised in that** heavy-metal-containing filter dusts and/or flue ashes are washed in an alkaline agent for transforming metal oxides to hydroxides, and are used as hydroxide sludge.

18. Method according to claim 17, **characterised in that** washing is effected at a pH value of > 9.

19. Method according to claim 17 or 18, **characterised in that** hydroxide sludges from washed filter dusts and/or flue ashes are used in combination with hydroxide sludges from galvanic plants or from chemical precipitation or solving processes or from waste water treatment plants.

20. Method according to claim 19, **characterised in that** the mixture, having been shaped into green compacts, contains
| | |
|---|---|
| 10 to 44 | parts by weight of hydroxide sludges |
| 50 to 90 | parts by weight of silts, |
| 5 to 30 | parts by weight of filter dusts and/or flue ashes, |
| 0 to 20 | parts by weight of a plasticising agent and |
| 0 to 30 | parts by weight of an admixture consisting of glass grinding sludge and/or waste foundry sand and/or blasting sand and/or finely ground fire clay from dry separators, |
(related to dry weight).

21. Method according to any of the preceding claims, **characterised in that** the green compacts are formed by extrusion and by cutting the moulded rope into pieces.

22. Method according claim 21, **characterised in that** a small quantity of an extrusion aid may be added to the mixture.

23. Ceramic body obtained by application of a method according to the preceding claims.

## Revendications

1. Procédé pour la fabrication de corps céramiques dans lesquels sont intégrés des résidus possédant une teneur en métaux lourds,
- en préparant un mélange façonnable contenant les résidus possédant une teneur en métaux lourds, de l'eau, du limon et une quantité inférieure, comparée à celle du limon, de 0-20 parties en poids d'un plastifiant,
- en façonnant des comprimés crus à partir du mélange et
- en cuisant les comprimés crus à une température et à une durée telles qu'elles donnent lieu à des corps frittés à densité maximale, analogues à du grès-cérame ou à du clinker.

2. Procédé pour la fabrication de corps céramiques dans lesquels sont intégrés des résidus possédant une teneur en métaux lourds,
- en préparant un mélange contenant les résidus possédant une teneur en métaux lourds, du limon et une quantité inférieure, comparée à celle du limon, de 0-20 parties en poids d'un plastifiant,
- en façonnant des comprimés crus à partir du mélange et
- en cuisant les comprimés crus à une température et à une durée telles qu'elles donnent lieu à des corps frittés à densité maximale, analogues à du grès-cérame ou à du clinker.

3. Procédé selon la revendication 1 ou 2, caractérisé en ce que, pour la préparation du mélange, on mélange de la boue d'hydroxyde possédant une teneur en métaux lourds ou encore un résidu de cette dernière avec du limon.

4. Procédé selon la revendication 1, 2 ou 3, caractérisé en ce qu'on réalise la cuisson à des températures entre 900°C et 1150°C.

5. Procédé selon la revendication 4, caractérisé en ce qu'on réalise la cuisson à des températures entre 950°C et 1080°C.

6. Procédé selon la revendication 5, caractérisé en ce qu'on réalise la cuisson à des températures entre 1020°C et 1070°C, en particulier entre 1040°C et 1060°C

7. Procédé selon l'une quelconque des revendications précédentes, caractérisé en ce qu'on mélange de 50 à 90 parties en poids de limon avec de 50 à 10 parties en poids de boue d'hydroxyde, les proportions se rapportant à la matière sèche.

8. Procédé selon l'une quelconque des revendications précédentes, caractérisé en ce qu'on mélange
de 50 à 90 parties en poids de limon avec
de 10 à 44 parties en poids de boue d'hydroxyde ou de résidus de cette dernière,
de 0 à 30 parties en poids de poussières de filtres et/ou de cendres volantes,
de 0 à 20 parties en poids d'un plastifiant et
de 0 à 30 parties en poids d'un additif de boue de polissage du verre et/ou de vieux sable de fonderie et/ou de grenaille et/ou de poudre d'argile provenant de séparateurs fonctionnant à sec,
(les indications se rapportant à la matière sèche).

9. Procédé selon la revendication 7 ou 8, caractérisé en ce qu'on mélange 2 parties en pcids de limon avec 1 partie en poids de boue d'hydroxyde.

10. Procédé selon l'une quelconque des revendications précédentes, caractérisé en ce qu'on met en oeuvre un mélange de limons de compositions différentes.

11. Procédé selon l'une quelconque des revendications précédentes, caractérisé en ce qu'on utilise des limons possédant des granulométries de 0,010 à 0,025 mm.

12. Procédé selon l'une quelconque des revendications précédentes, caractérisé en ce qu'on utilise, avec les résidus possédant une teneur en métaux lourds, des limons contenant des matières de charge.

13. Procédé selon l'une quelconque des revendications précédentes, caractérisé en ce qu'on utilise des limons qui proviennent d'installations de lavage des terres.

14. Procédé selon l'une quelconque des revendications précédentes, caractérisé en ce que le mélange ne contient pas plus de 10 parties en poids du plastifiant (rapportées à la matière sèche).

15. Procédé selon la revendication 14, caractérisé en ce qu'on met en oeuvre, à titre de plastifiant, une argile riche en aluminium.

16. Procédé selon la revendication 14, caractérisé en ce qu'on utilise, à titre de plastifiant, une boue d'hydroxyde contenant de l'aluminium.

17. Procédé selon l'une quelconque des revendications précédentes, caractérisé en ce qu'on lave dans un milieu alcalin des poussières de filtres et/ou des cendres volantes possédant une teneur en métaux lourds pour la transformation des oxydes métalliques en hydroxydes et on les met en oeuvre à titre de boue d'hydroxyde.

18. Procédé selon la revendication 17, caractérisé en ce qu'on lave à un pH ≥ 9.

19. Procédé selcn la revendication 17 ou 18, caractérisé en ce qu'on met en oeuvre des boues d'hydroxydes provenant de poussières de filtres et/ou de cendres volantes lavées en combinaison avec des boues d'hydroxydes provenant d'installations de galvanisation ou provenant de processus de précipitation et de dissolution chimiques ou encore d'installations de purification des eaux usées.

20. Procédé selon la revendication 19, caractérisé en ce que le mélange traité pour obtenir des comprimés crus contient (rapportées à la matière sèche)
de 10 à 44 parties en poids de boues d'hydroxydes
de 50 à 90 parties en poids de limons
de 5 à 30 parties en poids de poussières de filtres et/ou de cendres volantes
de 0 à 20 parties en poids d'un plastifiant et
de 0 à 30 parties en poids d'un additif de boue de polissage du verre et/ou de vieux sable de fonderie et/ou de grenaille et/ou de poudre d'argile provenant de séparateurs fonctionnant à sec.

21. Procédé selon l'une quelconque des revendications précédentes, caractérisé en ce qu'on façonne les comprimés crus par extrusion et par division de l'extrudat en plusieurs parties.

22. Procédé selon la revendication 21, caractérisé en ce qu'on ajoute éventuellement au mélange une quantité minime d'un adjuvant de compression.

23. Corps céramiques que l'on obtient en appliquant un procédé selon l'une quelconque des revendications précédentes.
